# EUROPEAN PATENT APPLICATION

(11) **EP 3 657 434 A1**
(43) Date of publication of application: **27.05.2020**
(21) Application number: 18208091.1
(22) Date of filing: 23.11.2018
(51) Int. Cl.: G06T 7/00

(54) **SYSTEM AND METHOD FOR DETERMINING A STATUS OF AN INSTRUMENT TIP OF A DENTAL OR MEDICAL TREATMENT DEVICE AND A SOFTWARE PRODUCT AND/OR NETWORK FOR PER-FORMING SAID METHOD**

(71) Applicant: Ferton Holding S.A., 2800 Delémont (CH)
(72) Inventor: Lebreton, Etienne, 1023 Crissier (CH)
(74) Representative: Müller Schupfner & Partner Patent- und Rechtsanwaltspartnerschaft mbB

(57) **Abstract**

A system for determining a status of an instrument tip (20) of a dental treatment device, in particular a interchangeable instrument tip (20), comprising:
- a receiving region (15) for placing the instrument tip (20) inside the receiving region (15) and
- a reference marking (40), wherein the system is configured such that the reference marking (40) and the instrument tip (20) can be visually detected simultaneously, preferably from a top view.

## Description

The present invention concerns a system and method for determining a status of an instrument tip of a dental or medical treatment device and a software product and/or network for performing said method.

It is well known from the prior art, for example from US 2006 / 0 123 958 A1, to use a torque wrench for connecting a replaceable medical or dental instrument tip to a handpiece. For example, the instrument is a dental instrument, and the instrument tip is a scaling tip that is used for removing plaque and/or tartar from teeth by scaling. Replaceable instrument tips allow applying types of instruments differing from each other with respect to their specifications and/or their use status by using one common handpiece. However, for avoiding damages of the instrument tip and/or the handpiece by applying an inappropriate high torque during connecting, the torque wrench limits the torque used for connecting the instrument tip and the handpiece on the one hand. On the other hand the torque wrench makes sure that the instrument tip is not connected to the handpiece too loose. For example, the torque wrench guarantees a proper connection of the instrument tip to the handpiece for transferring an ultrasonic movement generated by an activator unit of the handpiece to the instrument tip.

Another essential benefit of using a replaceable instrument tip is the possibility to change the instrument tip, in particular when the instrument tip is worn and cannot longer be used, without rising damages at the patient teeth, i. e. without an over instrumentation, or reducing the efficiency such that calculus or biofilms remain at the teeth. Typically, the instrument tip has to be replaced, when the length of the instrument tip has been reduced by more than 2 mm. Otherwise the vibration is not compatible anymore for periodontal applications. For enabling controlling the wear, "tip cards" are known. However, a great part of the dentists do not use the tip card due to the fact that most manuals accompanying the device are not consulted. This applies for instrument tips used for periodontal low vibration applications or used supragingival analogously.

Besides using a "tip card", another way for identifying the status of the instrument tip is known from US 9, 9,904,996 B2 that describes recording a digital picture of an instrument tip, at least of an end of the instrument tip. Subsequently, the contour of the worn tip is isolated from the digital picture and compared with reference images from a library of reference images, digitally. For recording the image of the instrument tip, the instrument tip is arranged in a defined position in a holding device and a camera for recording the digital picture is positioned relative to the fixed instrument tip by a platform of said holding device.

Considering the above state of the art, it was an object of the present invention to further improve the method for determining the status of an instrument tip of dental or medical treatment devices, in particular with respect to its handling and a precise determination of a degree of wear.

This object is achieved by the system for determining a status of an instrument tip of a dental or medical treatment device according to claim 1, the method according to claim 11 and a software product and/or network according to claim 15. Preferred embodiments are incorporated in the dependent claims, the description and the figures.

According to a first aspect of the present invention a system for determining a status of an instrument tip of a dental or medical treatment device, in particular a interchangeable instrument tip, is provided, comprising:
- a receiving region for placing the instrument tip inside the receiving region and
- a reference marking,
wherein the system is configured such that the reference marking and the instrument tip can be visually detected simultaneously, preferably from a top view.

In contrast to the state of the art, both the reference marking and the instrument tip can be visually detected simultaneously, when the instrument tip is arranged inside the receiving region. Hereby, the receiving region fixes the instrument tip in a predefined position. As a consequence, a reproducibility of determining the status of the wear can be improved compared to using a "tip card" and the reliability of the determination can be improved. On the other side, by simultaneously detecting both the instrument tip and the reference marking it is advantageously possible to avoid relying on a library of reference images of instrument tips as disclosed in US 9,904,996 B2. Instead, the user can for example easily approximate the status of the instrument by a first visual check. Preferably, the status is determined by projecting the end of the instrument tip on a plane including the reference marking, such that the relative position of the projected end to the reference marking is a measure for a degree of wear. For detecting the reference marking and the instrument tip simultaneously, the reference marking and the receiving region have to be at least arranged such that the projection of the instrument tip or preferably a pointed end of the instrument tip, in particular from a top view, is placed near or on the reference marking. The term "near" preferably describes a distance of less than 5 cm, more preferably less than 2.5 cm and most preferably less than 1 cm. In particular it is provided that the instrument tip protrudes from the plane including the reference marking, in particular along a direction perpendicular to the plane including the reference marking.

The instrument tip is preferably a scaling tip, i. e. an instrument tip that is used to clean teeth by scaling. In particular, a handpiece and the instrument tip form the dental treatment device in a mounted state. The instrument tip might be formed by a cylindrical metallic body that is bend and/or twisted, wherein the metallic body tapers to a sharp or pointed end. Thus, the projection of the instrument tip from a top view focusses on the relevant pointed end of the instrument tip that is twisted and protrudes from the cylindrical body of the instrument tip in the top down view perspective. Hereby, the top view, i.e. a top-down view perspective, extends mainly parallel to a direction perpendicular to the plane including the reference marking and parallel to the non-bended part of the cylindrical body of the instrument tip. For example, the top view is mainly oriented parallel to an insertion direction along that the instrument tip is inserted into the receiving region. As a consequence, the system including the reference marking can be designed smaller, since the projection from a top view on the instrument tip is used for determining the status of the instrument tip, in particular compared to those that detects a side view of the instrument tip, such as it is known from "tip cards".

In operation, i. e. during using the instrument for removing tartar and/or plaque from the teeth, the instrument tip is mounted on the handpiece for carrying the instrument tip during the operation, wherein the instrument tip is arranged on one front end of the handpiece. For removing tartar and/or plaque from the teeth the handpiece having the instrument tip is lead to the teeth such that the instrument tip is in contact with the surface of the teeth. Preferably, the handpiece comprises an activator unit for activating a movement, in particular an ultrasonic movement, of the instrument tip connected to the handpiece. This ultrasonic movement supports removing spots, plaque and/or dentine tartar. The instrument tip might be used subgingival or supragingival.

For example, the reference marking is a ring surrounding the receiving region, preferably the ring and the receiving region are arranged concentrically to each other. Thus, the reference marking can be used independent from an orientation of the pointed end of instrument tip inside the receiving region. It is also conceivable that the receiving region is configured such that the orientation of the twisted and/or bended end of the instrument tip is defined and the reference making is only realized in a corresponding region next to the receiving region, for example as arc.

It turned out the system is even able to determine the status of the instrument tip properly, if the instrument tip is slightly distorted, in particular in such cases, when the distortion is smaller than 1 mm or 2 mm. Such a distortion might be caused by a fall or another accident. Thus, it is advantageously possible to take small lateral deviation of the instrument tip into account. Distortion exceeding the above mentioned limit of 1 mm or 2 mm are anyway clearly visible to the dentist and would initiate a counter measure, such as for example bending the instrument tip back or changing the instrument tip.

Preferably, it is provided that the receiving region and/or the reference marking are part of a torque wrench for connecting the instrument tip to a handpiece. Thus, the reference marking is incorporated in advantageously manner to a component being used anyway by the user for connecting the instrument to the handpiece. Consequently, the dentist can at least approximate the current status on a regular basis, without needing an additional tip card or holding device. Therefore, no additional device for determining the status of the instrument tip needs to be provided, in particular for a first visual check. In particular, the instrument tip needs to be positioned inside the receiving region of the torque wrench anyway.

In another embodiment, it is provided that the reference marking is interchangeably attachable to the torque wrench. Thus, it is possible to adapt the reference marking to the type of the instrument tip that may differ in thickness and length from each other. As a consequence, a single torque wrench can be used for different types of instrument tips, wherein the reference marking is changed, when the instrument tips are switched. Preferably, the reference marking is jammed to a first front side of the torque wrench, wherein the first front side is faced to the pointed end of the instrument tip. In particular, the reference marking can be fixed to the torque wrench in a formfitting and/or positive fitting manner. Furthermore, it is provided that that the reference marking is attachable to the torque wrench in a reproducible way such that the reference marking is located at the same position. For example, there is an abutment that supports the proper adjustment of the reference marking. Preferably, the abutment is realized by or at the receiving region, for example as a collar surrounding the receiving region.

According to another embodiment, the system comprises a visual detection device, such as a camera, for simultaneously detecting the reference marking and the instrument tip. For example, the camera is incorporated into a mobile unit, such as a smart phone or tablet. By detecting the reference marking and the instrument tip from the top view it is possible to easily take an image showing the projection of the instrument tip on the plane including the reference marking, in particular the first front side of the torque wrench. It is conceivable that the detection device is configured such that the user is supported to properly align the detection unit relative to the instrument tip and/or the reference marking. For example, the detection device is configured such that the user moves the detection unit above the torque wrench and/or the instrument tip till the detection unit informs the user about the proper alignment of the detection unit. In particular, the user is informed by the detection unit, when a parallax free image can be recorded. Thus, no additional correction need to be performed. Preferably, the user is informed by an acoustical and/or an optical signal.

In another embodiment of the present invention, it is provided that the system comprises an identification element, such as a bar code or QR code, for identifying a type of the instrument tip being placed in the receiving region, wherein in particular the identification is arranged such that reference marking, the identification element and the instrument tip can be visually detected simultaneously, preferably from a top view. Thus, it is advantageously possible to detect and to determine the kind of the instrument tip and the status of the instrument tip, for example by taking only one image. Preferably, the identification element is connected to the reference marking that is chosen in correspondence with the current instrument tip in use. For example, the identification element is arranged in the plane comprising the reference marking or is arranged at least parallel to it. In particular, the information concerning the type of the instrument tip is used for determining the status of the instrument tip.

In another embodiment of the present invention, it is provided that the system comprises an evaluation unit being in communication with the visual detection device. Preferably, the evaluation unit has a processor for preforming calculation and/or evaluations concerning the recorded image that is recorded by the detection unit. By using the evaluation unit it is advantageously possible to precisely determine the degree of wear of the instrument tip. For example, the evaluation unit is incorporated in the mobile unit or is part of a network being in communication with the visual detection unit. Preferably, the evaluation unit is configured for identifying elements in the recorded image and assigning these elements to the instrument tip and/or the reference marking.

Preferably, the evaluation unit is configured such that
- the evaluation unit determines the position of the visual detection device relative to the reference marking and/or the receiving region and/or
- the evaluation unit corrects a relative position of a projection of the instrument tip on the reference marking in a image detected by the detection device. By detecting the actual position of visual detection device relative to the reference marking and/or the receiving region it is advantageously possible to take into account a parallax caused by a deviation from an optimal recording position, for example 30 cm apart from the first plane including the reference marking and centrally located above the receiving region. Thus, the user can easily record the image, without being worried whether he has recorded the image of the instrument tip and the reference marking such that the recorded image is reliable for determining of the status of the instrument tip, since the evaluation unit corrects the shifts of the relative positioning between the projected end of the instrument tip and the reference marking caused by deviations of the detection device from the optimal recording position.

Preferably, it is provided that a hysteresis is taken into account for correcting the relative position of the end of the instrument tip relative to the reference marking. Thus, it is possible to avoid confusion that might rise form imprecision of the measurement and might result in different outputs, in particular when the instrument tip is at its limit that makes it necessary to change the instrument tip. Herewith it is provided that the hysteresis is higher than a level of imprecision combining:
- a relative freedom of position of the instrument tip in the torque wrench and
- a relative imprecision of recorded measurement, i. e. image. By using the hysteresis it is preferably possible to perform consecutively different measurements with the same torque wrench that result in the same value of correction.

In another embodiment, it is provided that the torque wrench comprises a housing surrounding the instrument tip being arranged in the receiving region, wherein the reference marking, the housing and the instrument tip can be visually detected simultaneously, wherein the position of the housing is used for determining the position of the visual detection device relative to the reference marking and/or the receiving region. Thus, it is advantageously possible to approximate the position of the detection device for example by identifying a deviation from a concentric arrangement between the housing and the reference marking. Further the size of the reference marking and/or the housing in the recorded image can be used to determine the disctance between the reference marking and the detection device.

Preferably, it is provided that the evaluation unit is configured for determining the status of the instrument tip based on the corrected relative position between the instrument tip and reference marking. Thus, it is possible to automatically determine the status of the instrument tip, in particular a degree of wear, in a precise and corrected way.

In another embodiment of the present invention, it is provided that the system comprises an output device for informing an user about the status of instrument tip. Consequently, the user can be informed about the status of the instrument tip, for example whether a change of the instrument tip is necessary or not. The output device might be a display, for instance the display of the mobile unit, and/or a loudspeaker for generating an acoustic signal and/or a LED for generating a visual signal.

Another aspect of the present invention is a method for determining the status of instrument tip of a dental treatment device, in particular by using a system according to one of the preceding claims, comprising:
- positioning the instrument tip in a receiving region,
- detecting a projection of the instrument tip on a plane comprising a reference marking, wherein the plane preferably extends perpendicular to the orientation of the instrument tip fixed to the receiving region, and
- determining the status of the instrument tip based on the relative position of the projection of the end of the instrument tip to the reference marking.

According to another embodiment of the present invention it is provided that the projection of the instrument tip is detected from a top down view perspective on the instrument tip.

Furthermore, it is preferably provided that the projection of the instrument tip is detected by a detection device, in particular by a visual detection device such as a camera.

In another embodiment of the present invention, it is provided that a parallax free relative position between the projection of the end of the instrument tip and the reference marking is used for determining the status of the instrument tip, in particular by using an evaluation unit.

Another aspect of the present invention is a software product and/or a network, wherein the software product and/or the network comprises program code for implementing one of the methods according the present invention.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows a side view of a torque wrench according to a preferred embodiment of the present invention,
- Fig.2: schematically shows a cross side view of the torque wrench illustrated in figure 1
- Fig.3: schematically shows perspective views of the torque wrench illustrated in figure 1
- Fig.4: shows a component suitable for being mounted on the torque element of the figures 1 to 4 or to another torque wrench
- Fig. 5: shows a method for determining the status of the instrument tip according to a preferred embodiment
- Fig. 6a to 6c: shows top views of different perspectives on a torque wrench having a reference marking
- Fig. 7: shows a flow diagram illustrating a method according to a further preferred embodiment and
- Fig. 8: shows top views of torque wrenches having different types of instrument tips

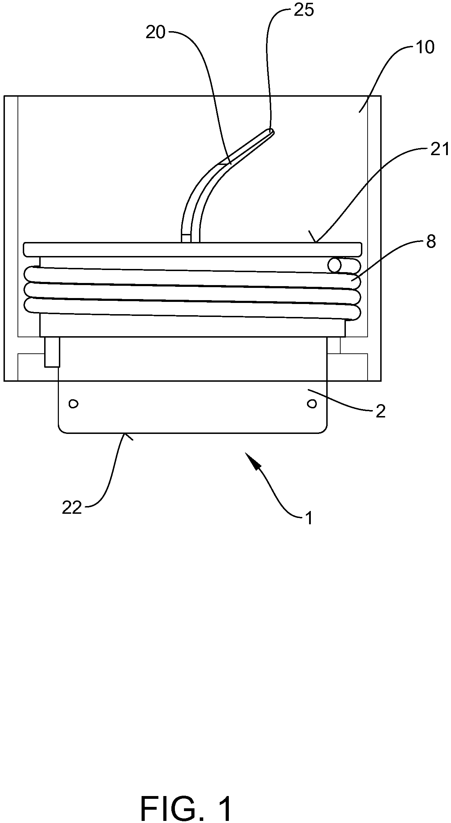

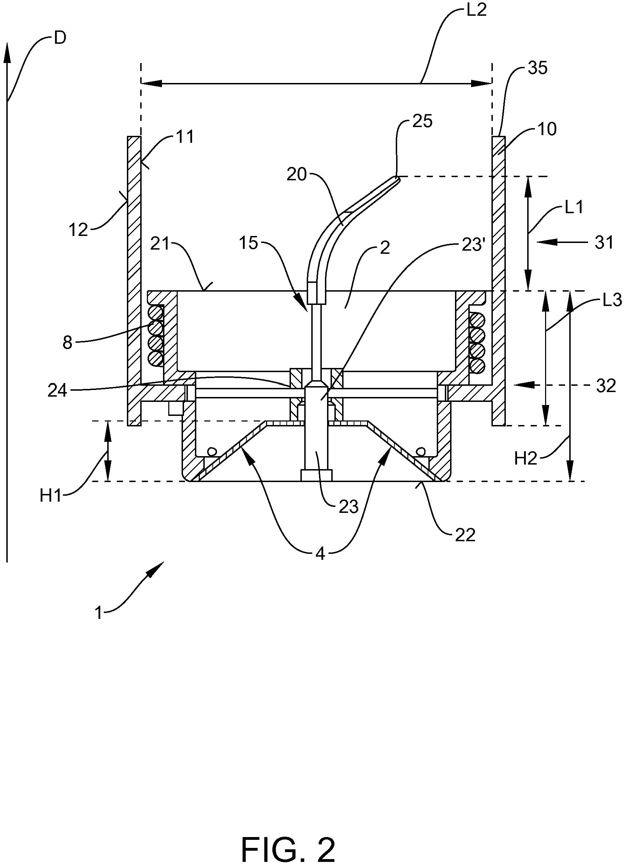

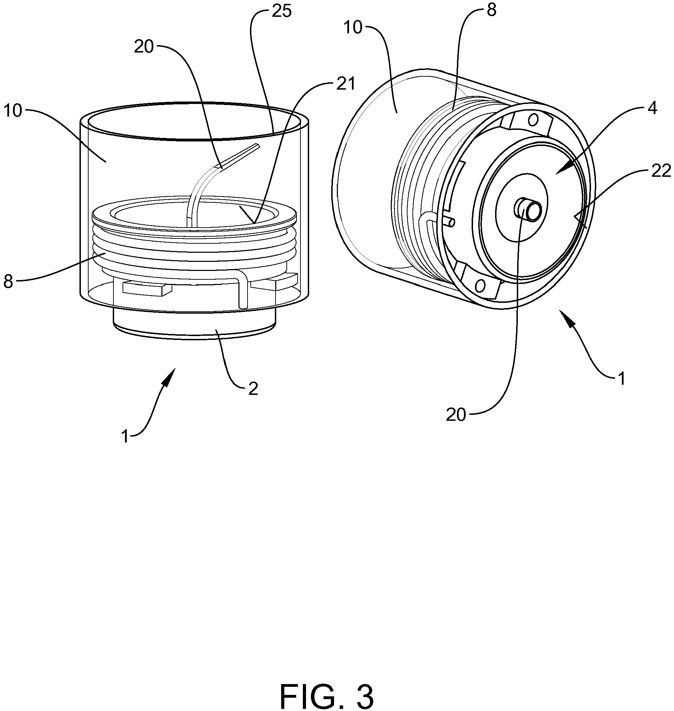

In **the** **figures 1 to 3** a torque wrench 1 for connecting a replaceable instrument tip 20 to a handpiece that carries the replaceable instrument tip 20 in operation is shown in a side view (figure 1), in a cross sectional view (figure 2) and in a perspective view (figure 3). For example the replaceable instrument tip 20 is a scaling tip, i. e. an instrument tip 20 that is used to clean teeth by scaling, and in particular in the mounted state the handpiece and the instrument tip 20 form a medical instrument, preferably a dental instrument.

Such an instrument tip 20 might be formed by a cylindrical metallic body that is bend and/or twisted, wherein the metallic body tapers to a sharp or pointed end 25. In operation, i. e. during using the instrument for removing tartar and/or plaque from the teeth, the instrument tip 20 is mounted on a handpiece for carrying the instrument tip 20 during the operation, wherein the instrument tip 20 is arranged on one front end of the handpiece (not shown). For removing tartar and/or plaque from the teeth the handpiece having the instrument tip 20 is lead to the teeth such that the instrument tip 20 is in contact with the surface of the teeth. Preferably, the handpiece comprises an activator unit for activating a movement, in particular an ultrasonic movement, of the instrument tip 20 connected to the handpiece. This ultrasonic movement supports removing spots, plaque and/or dentine tartar. The instrument tip 20 might be used subgingival or supragingival.

In particular, the handpiece is constructed such that the activator unit transfers the ultrasonic movement to the instrument tip 20 being located at the front end of the handpiece. For example, the activator unit comprises a piezo element for realizing the ultrasonic movement. The handpiece might further comprise a cooling unit such a cooling circuit including a water inlet and/or outlet, for cooling the handpiece during its operation. It also conceivable that the handpiece has a power supply for providing energy to a light source such as a LED.

The scaling during operation typically wears the instrument tip 20 out. Consequently, the instrument tip 20 is a consumption item that is renewed from time to time. Thus, the instrument tip 20 is configured replaceable and is no integral part of the handpiece. Another benefit of a replaceable instrument tip 20 is changing between different types of instrument tips 20 by using the same common handpiece. In particular, the instrument tip 20 and the handpiece are connected to each other via interface areas being respectively assigned to the handpiece and the instrument tip 20.

For connecting the instrument tip 20 to the handpiece and/or for disconnecting the instrument tip 20 a torque wrench 1 is used. As a consequence, it is possible to apply the proper torque that does not destroy the handpiece, in particular a corresponding interface area of the handpiece, and simultaneously guarantees that the instrument tip 20 is connected not too loose for transferring the ultrasonic movement from the handpiece to the instrument tip 20 properly.

The torque wrench 1 presented in figure 1 comprises a base element 2 having a recess forming a receiving region 15 for placing the instrument tip 20 inside the receiving region 15. Besides the receiving region 15 the torque wrench 1 has a torque wrench mechanism for applying a certain torque when connecting the instrument tip 20 to the handpiece. In particular, a spring 8 surrounding the base element 2 represents a part of the torque wrench mechanism. Such a torque wrench mechanism is described for example in US 2006 123 958 A1, of which content concerning the torque wrench mechanism is incorporated explicitly herewith.

In the embodiment presented in figure 1 the base element 2 mainly has a cylindrical form, wherein in a mounted state the instrument tip 20 protrudes from a first front side 21 of the cylindrical base element 2, when the torque wrench is equipped with the instrument tip 20 and a second front side 22 opposite to the first front side 21 includes a guiding structure 4 that supports connecting the instrument tip 20 to the handpiece. For equipping the handpiece with a certain instrument tip 20, the instrument tip 20 is inserted inside the hole forming the receiving region 15. In particular, the instrument tip 20 extends through the base element 2, in particular the whole base element 2, when the torque wrench 1 is equipped with the instrument tip 20, wherein preferably the pointed end 25 of the instrument tip 20 faces away from the first front side 21. Furthermore the torque wrench 1 and the instrument tip 20 are connected with each other via a coupling mechanism 24, preferably a coupling mechanism 24 based on a key lock principle. For example, the instrument tip 20 has a mainly cylindrical base body 23 at its end being opposite to the pointed end 25, which is used for removing tartar and/or plaque, and the base body 23 comprises a key lock region 23' having a preferably non-circular cross section. This lock region 23' having a different cross section interacts with a corresponding recess in the base element 2 at the second front side 22 for forming the coupling mechanism 24. In particular, it is provided that the instrument tip 20 is inserted into the hole, i. e. the receiving region 15, by entering the hole at the second front side 22. The instrument tip 20 might be fixed to the torque wrench 1 via a clip or a magnet.

To limit the risk of an injury, it is provided that the second front side 22 of the base element 2 has the guiding structure 4 for aligning the instrument tip 20 during inserting the instrument tip 20 into the torque wrench, in particular the receiving region 15. In particular, the torque wrench 1 is moved towards the receiving region 15, for example manually, and the guiding structure 4 shifts the torque wrench 1 and/or the instrument tip 20 laterally. The guiding structure 4 is preferably realized by a corresponding curvature, for example concave curvature, of the second front side 22 of the torque wrench 1. In particular, the guiding structure 4 forms an opening that tapers along a direction parallel to the insertion direction D, in particular in a direction pointing to the first front side 21 of the torque wrench 1. In particular the insertion direction D corresponds to a longitudinal direction of the receiving region 15.

Furthermore it is conceivable that the guiding structure 4 is concentric to the base body 23 of the instrument tip 20 extending from the second front side 22, when the torque wrench 1 is equipped with the instrument tip 20. For example, the guiding structure 4 forms a funnel or chute. Preferably, the guiding structure 4 has a first height H1 extending parallel to the insertion direction D and a relation between the first height H1 and the whole height H2 of the base element 2 measured along the insertion direction D has a value between 0.1 and 0.5, preferably between 0.15 and 0.4 and more preferably between 0.2 and 0.3.

Moreover, it is preferably provided that the torque wrench 1 is individualized to a certain type of instrument tip 20 and/or a certain sub-ensemble of types of instrument tips 20. This might be realized by adapting the receiving region 4, i. e. the hole, corresponding to an outer surface of the instrument tip 20, in particular the outer surface of the base body 23 of the instrument tip 20. As a consequence, it is possible to label the torque wrench 1 with an individual identification that identifies the type of the instrument tip 20 being installed at the torque wrench 1. For example, a name of the instrument tip 20 is engraved into a portion of the base element 2 of the torque wrench 1 being visually ascertainable, such as the first front side 21. It is also conceivable that the base element 2 has a colour code, wherein each colour or colour combination is assigned to a specific type of instrument tip 20.

Further, the identification of the instrument tip 20 being inserted into the torque wrench 1 is supported by a transparent housing 10 that surrounds the part of the instrument tip 20 extending or protruding from the first front side 21 of the base element 2. Due to the transparent housing 10 it is advantageously possible to simultaneously protect the instrument tip 20, in particular the part of the instrument tip 20 that extends from the first front side 21 and that is thinner than the base body 23 of the instrument tip 20, and see and identify the instrument tip 20. Preferably, it is provided that the housing 10 has a shape being concentrically to the base element 2 of the torque wrench 10 and/or the hole forming the receiving region 15. Furthermore, the housing 10 has an inner surface 11 and an outer surface 12, wherein at least in a primary region 31 extending from the first front side 21 of the base element 2 to the end 25 of the instrument tip 20 the inner surface 11 and the outer surface 12 are fully or completely parallel to each other. Preferably, the primary region 31 extends from the first front side 21 of the base element 2 to the end 35 of the housing 10 in a direction perpendicular to the first front side 21 or parallel to the insertion direction D. It is also conceivable that primary region 31 extends over the whole housing 10. Realizing the inner surface 11 and the outer surface 12 of the housing 10 completely cylindrically and parallel to each other means that there no deformation incorporated into the housing 10 that usually are intended to simplify gripping of the housing 10 and therefore the torque wrench 1. It is also conceivable that the housing 10 has at least one deformation in a secondary region 32 of the housing 10, wherein the secondary region 32 extends from the first front side 21 to at least the second front side 22 of the base element.

In particular, it is provided that a first length L1 is assigned to the primary region 31 extending from the base element 2 at least to the end 25 of the instrument tip 20, preferably exactly to the end 25 of the instrument tip 20, and a second length L2 is assigned to a maximal distance of an opening defined by the inner surface 11, wherein the second length L2 is larger than the first length L1, in particular the second length L2 is 1 to 6 times, preferably 1.2 to 2.5 times and more preferably 1.3 to 1.8 times bigger than the first length L1. These dimensions and in particular a first front side 21 corresponding to the opening, simplifies taking a look from above on the instrument tip 20. Further, it is possible to provide information of the used instrument tip 20 on the first front side 12 of the base element 2 being comparable large. Preferably, the secondary region 32 has a third length L3 being smaller than the first length L1, preferably 1.5 to 5 times smaller.

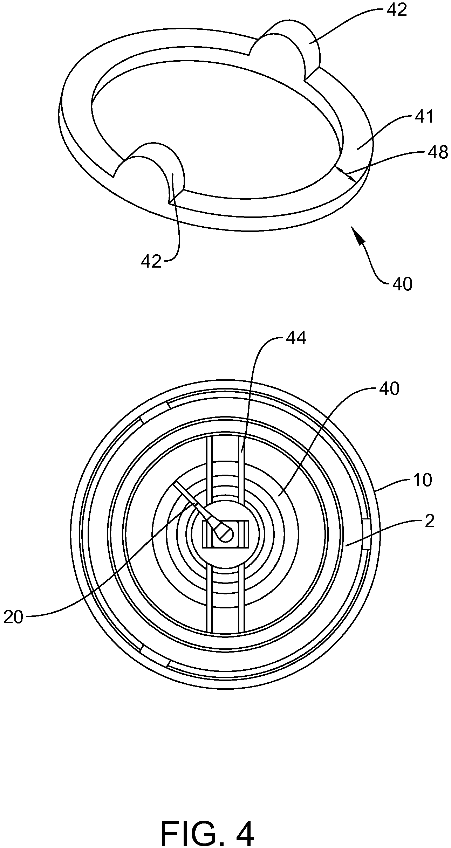

In **figure 4** a component suitable for being mounted on the torque element 1 of the figures 1 to 3 or to another torque wrench 1 is shown. In particular, the component is shown isolated from the torque wrench 1 (top) as well as mounted on the torque wrench 1 (bottom). The component mainly comprises a ring 41, in particular a ring 41 made from plastic that is placed concentrically onto the first front side 21 of the base element 2, in particular concentrically to the receiving region 15 and/or the base body 23 of the instrument tip 20 being equipped to the torque wrench 1. For mounting the ring 41 at the first front side 21, the ring 41 comprises protrusions 42 for realizing a force and/or form fitting fixing. In the embodiment presented in figure 4 the protrusions 42 corresponds to an arc shaped or circular curvature extending perpendicular to the plane of the ring 41 and the two protrusions 42 are arranged opposite to each other. In the mounted state each of the protrusions 42 is located between two bridging member 44 such that the protrusions 42 are jammed or clipped between the bridging members 44 that mainly extend parallel to the first front side 21. The mounted ring 41 represents a reference marking 40 that can be used to identify the status of the instrument tip 20 being equipped to the torque wrench 1. In particular, a thickness 48 of the ring 41 measured in a radial direction relative to the receiving region 15 represents the reference marking 40 for identifying the status of the instrument tip 20. Alternatively or additionally, it is also conceivable that the ring 41 is fixed to the first front side 21 in a different way, for example in an adhesive of positive fitting manner. The ring 41 might also painted on the first front side.

The illustration at the bottom side of the figure 4 represents a top view on the torque wrench 1 being equipped with the ring 41 and the instrument tip 40. The instrument tip 40 is orientated in a predefined way. For example the shape of the base body 23 of the instrument tip 20, i. e. its non-circular cross section, and the corresponding recess at the second front side 22 of the base element 2 pre-defines the orientation of the end 25 of the instrument tip 20. In a case of a squared cross section, there are for example four orientation of the instrument tip 20 extending from the first front side 21 possible.

For identifying the status of the instrument tip 20, in particular its length, a user places the torque wrench 1 for example on a horizontal plane, such as a table 7 or try, and the user can approximate the status from a defined top view perspective, i. e. from a top-down perspective directed on the first front side 21 of the torque wrench 1. For example, the user needs to be placed 30 cm from the torque wrench 1. Thus, it is possible to use the reference marking 40 when projecting the instrument tip 20, in particular its end 25, onto the first front side 21 having the ring 41. For example, the projection of the instrument tip 20 onto the first front side 21 extends to the outer circle of the ring 41, when the instrument tip 20 is new, and the projection of the instrument tip 20 on the first front side 21 ends extending at the inner circle of the ring 41, when the instrument tip 20 is weared at the limit. Consequently, it is possible to verify the length of the instrument tip 20 by a simple visual check, advantageously. By visual detecting or checking both the reference marking and the instrument tip simultaneously, the user, for example, can approximate whether a precise determination of the length of the instrument tip is necessary. Further, there is no need for placing the instrument tip at an additional device such as tip card or dental scaler insert holder. Instead of that that the fixed positioning of the instrument tip in the receiving region that has to be realized anyway can already been used for getting a first approximation of the status of the instrument tip.

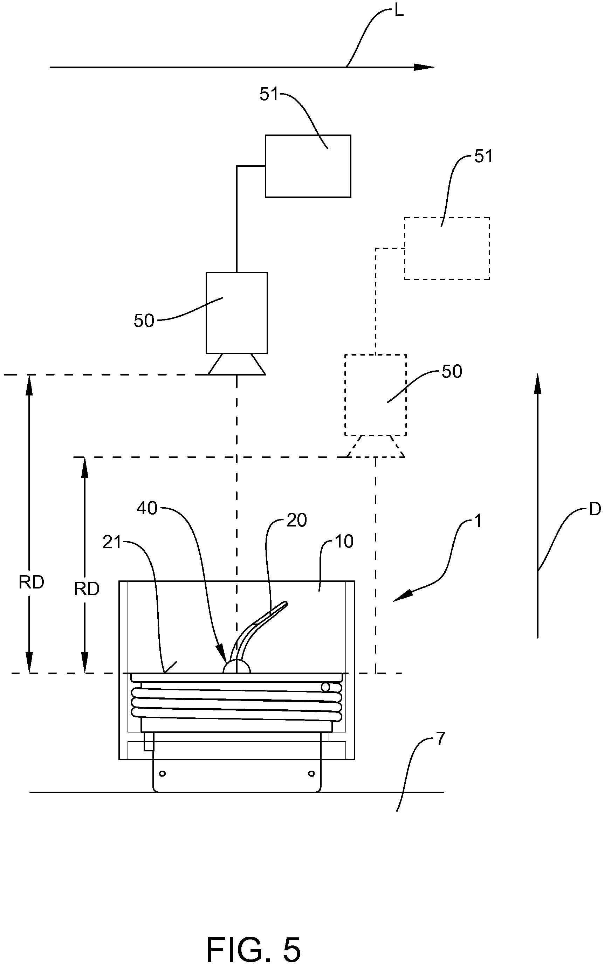

In **figure 5**, a system for determining a status of an instrument tip 20 is illustrated according to a first preferred embodiment of the present invention. In addition to the system illustrated in figure 4, the system further comprises a detection device 50, in particular a visual detection device 50, and an evaluation unit 51. For determining the degree of wear precisely, it is preferably provided that an image is recorded by the visual detection device 50 that may be a camera, for example incorporated in a smart phone or tablet. The recorded image includes the projection of the instrument tip 20 onto the first front side 21 of the torque wrench 1 along a top-down-view- perspective. Since the resulting image, i. e. the projection of the instrument tip 20 onto the first front side 21, strongly depends on a projection direction, i. e. a perspective from which the image is recorded, there is the evaluation unit 51 for correcting a parallax effect caused by a certain position of the visual detection device 50 relative to the first front side 21, the instrument tip 20 and/or the receiving region 15.

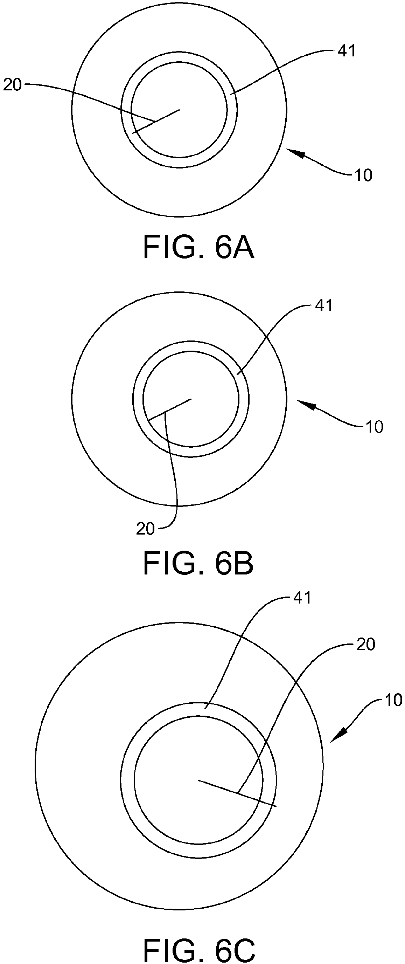

The **figures 6a to 6c** shows the influence of the relative position of the visual detection device 50 to the torque wrench 1 on the projection of the instrument tip 20 that is recorded by the visual detection device 50. In figure 1, the recorded image being illustrated at the top is generated by a visual detection device 50 being arranged optimally to the instrument tip 20, namely centrally above the centre of the torque wrench 1 in a recording distance RD of 30 cm, as it is illustrated schematically by the detection device 50 and the evaluation unit 51 in figure 5 by the solid line. In contrast to that, figure 6b might be result of recording/detecting the image from a position being shifted laterally along a lateral direction L away from a central position above the instrument tip 20. The image shown in figure 6c might be a result of the detection device 50 position that is illustrated in figure 5 by the dashed line. The position is shifted along the lateral direction L and has a reduced recording distance RD, for example less than 30 cm. As shown, the parallax effect might result to different recorded projection onto the reference marking 40 for the same length of the same instrument tip 20.

Therefore, it is provided that the evaluation unit 51 is configured for determining the relative position of the visual detection device 50 relative to the receiving region 15 of the torque wrench 1. For that, the evaluation unit 51 might compare the arrangement of the ring 41 relative to the curvature of the housing 10 of the torque wrench 1. For example, a deviation from a concentric arrangement of the housing 10 curvature and the ring 41 might give an idea of the shift of the detection device 50 along the lateral direction L. Another hint for the position of the projection device, the evaluation unit 51 might get from an ellipticity of the ring 41 in the recorded image, if the ring 41 is a circle in reality. Further, it is conceivable that the evaluation unit 51 might deduce the recording distance RD, or the distance of the detection device 50 from the first front side 21 of the torque wrench 1 from the absolute size of the ring 41 and/or the housing 10. It is also thinkable that a blurring of the recorded instrument tip 20 might be used for approximating the recording distance RD by taking into account for example a focal length of a lens used by the detection device 50. It might also conceivable that the system comprises a micromechanical element for determining an orientation of the detection device 50.

Depending on the information of the relative position of the detection device 51 relative to the first front side 21, it is advantageously possible to correct the projected position of the end 25 of the instrument tip 20 relative to the reference marking 40, i. e. the ring 41, in the plane including the reference marking. In other words: the effect of the parallax can be corrected in the recorded image.

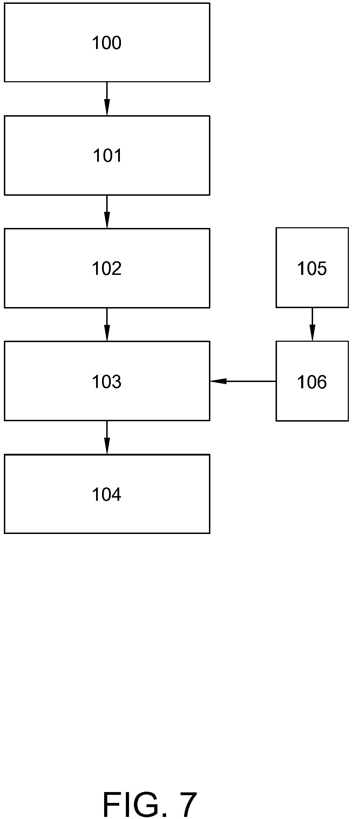

The **figure 7** shows a flow diagram illustrating a method for determining the status of the instrument tip 20 according to a preferred embodiment of the present invention, in particular by a system shown in figure 5. For example the method starts with positioning 100 the instrument tip 20 in the receiving region 15, in particular in the receiving region 15 of a torque wrench 1, for fixing the instrument tip 20 in a fixed position. Preferably, the toque wrench 1 is placed on a table 7. Subsequently, an image is recorded, in particular from a top view perspective by the visual detection device 50. After recording/detecting 101 the image, a relative position of the detection device 20 to the receiving region 15 of the instrument tip 20, preferably to the first front side 21 of the torque wrench 1 is calculated based on information included in the recorded image, such as for example based on an absolute size of the ring 41 or an arrangement of the ring 41 relative to the housing 10 of the toque wrench 1 in the recorded image. The calculated information about the relative position of the detection device 50 is, in turn, used for correcting 103 the relative position of the projected end 25 of the instrument tip 20 on the reference marking 40 or the first front side 21, preferably in the recorded image. It is even conceivable that the correction is visualized to the user, for example in a real - time image that is recorded by the detection device 50. In particular, correcting 103 the relative position of the projected end 25 of the instrument tip 20 allows determining the status of the instrument tip 20. Afterwards it is possible to inform the user of the instrument tip 20, whether the instrument tip 20 has to be changed or can be used another time, by determining the relative position of the correction position of the projected end 25 of the instrument tip 20 to the reference marking 40, in particular in the context of figure 5. For example, a warning signal, such as an acoustical signal, a text massage and/or an optical signal is provided by detection device 50 and/or the evaluation unit 51, in particular by the smart phone or the tablet.

It is also conceivable that for determining the degree of wear it is provided that a hysteresis is determined for the system by taking into account previous measurements 105, i. e. previous evaluations of recorded images of the same instrument tip 20. Thus, it is possible to estimate a standard deviation 106 for the correction term that corrects the relative position of the projected end 25 to the reference marking 40. As a consequence, it is possible to take the information about the hysteresis into account for checking whether a new instrument tip 20 has to be used. For example, it is conceivable that the standard deviation 106 is added to or substracted from the correction term, that shifts the projected end 25 of the instrument tip 20 relative to the reference marking 40, to make sure, whether an instrument tip 20 has to be changed.

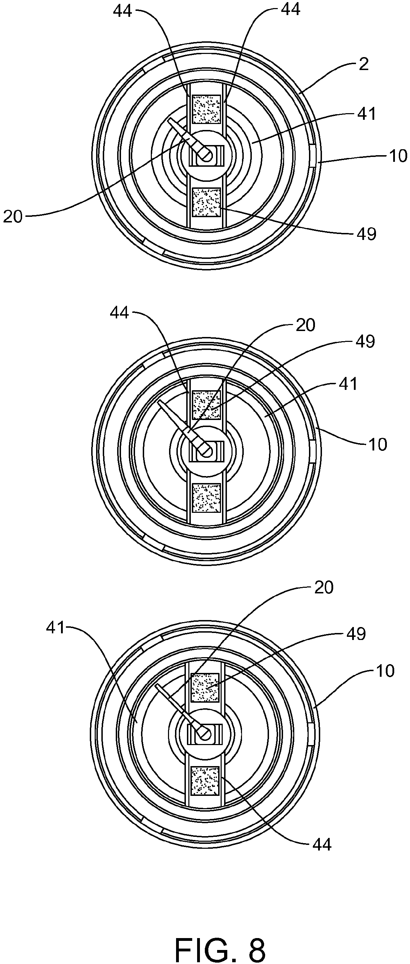

In **figure 8**, several different types of instrument tips 20, namely three different types of instrument tips 20, are shown from a top down view perspective. These instruments tips 20 are mounted to the torque wrench 1 having each a reference marking 40, in particular a reference marking 40 as described in detail in figures 4 and 5. For example, the instrument tip 20 illustrated in the arrangement of figure 8 at the top is used for supragingival treatment, the instrument tip 20 in the arrangement at the bottom of figure 8 is used for periodontal low vibration application. Thus, the instrument tips 20 differ from each other by their geometrical design, for example in their thickness and/or length. By using a reference making 40 that can be fixed via the bridging element 44 as described in the context of figure 4 it is advantageously possible to use the corresponding reference marking 40 for the instrument tip 20 at the same torque wrench 1. In other words: When the type of instrument tip 20 is changed, the reference making 40 is changed correspondingly. Further, it is preferably provided that a identifying element 49 is provided, wherein the identifying element 49 comprises direct or indirect information about the instrument tip 20 and/or the reference marking 40 in use. For example, the identifying element 49 is connected to the reference marking 40, in particular connected to the bridging member 44 of the reference marking 40. The identifying element 49 might be a barcode or a QR code as presented in figure 8. Preferably, it is provided that the information about the current instrument tip 20 and/or the reference marking 40 in use is used for determining the relative position of the detection device 50 to the instrument tip 20, the first front side 21 and/or the receiving region 15.

### Reference list:

- 1: torque wrench
- 2: base element
- 4: guiding structure
- 7: table
- 8: spring
- 10: housing
- 11: inner surface
- 12: outer surface
- 15: receiving region
- 20: instrument tip
- 21: first front side
- 22: second front side
- 23: base body
- 23': key lock region
- 24: coupling mechanism
- 25: end
- 31: primary region
- 32: secondary region
- 35: end of housing
- 40: reference marking
- 41: ring
- 42: protrusion
- 44: bridging member
- 48: thickness
- 49: identification element
- 50: detection device
- 51: evaluation unit
- 100: positioning
- 101: recording/detecting
- 102: calculation
- 103: correcting
- 104: determining
- 105: measurements
- 106: standard deviation
- L1: first length
- L2: second length
- L3: third length
- H1: first height
- H2: whole height
- D: insertion direction
- L: lateral direction
- RD: recording disctance

## Claims

1. A system for determining a status of an instrument tip (20) of a dental or medical treatment device, in particular an interchangeable instrument tip (20), comprising:
- a receiving region (15) for placing the instrument tip (20) inside the receiving region (15) and
- a reference marking (40),
wherein the system is configured such that the reference marking (40) and the instrument tip (20) can be visually detected simultaneously, preferably from a top view.

2. The system according to claim 1, wherein the receiving region (15) and/or the reference marking (40) are part of a torque wrench (1) for connecting the instrument tip (20) to a handpiece.

3. The system according to claim 2, wherein the reference marking (40) is interchangeably attachable to the torque wrench (1).

4. The system according to one of the preceding claims, further comprising a detection device (50), such as a camera, for simultaneously detecting the reference marking (40) and the instrument tip (20).

5. The system according to one of the preceding claims, further comprising an identification element (49), such as a bar code or QR code, for identifying a type of the instrument tip (20) being placed in the receiving region (15), wherein in particular the identification element (49) is arranged such that reference marking (15), the identification element (49) and the instrument tip (22) can be visually detected simultaneously, preferably from a top view.

6. The system according to one of the preceding claims, further comprising an evaluation unit (51) being in communication with the detection device (50).

7. The system according to claim 6, wherein the evaluation unit (51) is configured such that
- the evaluation unit (51) determines the position of the detection device (50) relative to the reference marking (40) and/or the receiving region (15) and/or
- the evaluation unit (51) corrects a relative position of a projection of the instrument tip (20) on the reference marking (40) in an image detected by the detection device (50).

8. The system according to claim 7, wherein the torque wrench (1) comprises a housing (10) surrounding the instrument tip (20) that is arranged in the receiving region (15), wherein reference marking (40), the housing (40) and the instrument tip (20) are arranged such that they can be visually detected simultaneously, wherein in particular the position of the housing (10) is used for determining the position of the visual detection device (50) relative to the reference marking (40) and/or the receiving region (15).

9. The system according to claim 6, 7 or 8, wherein the evaluation unit (51) is configured for determining the status of the instrument tip (20) based on the corrected relative position between the instrument tip (20) and reference marking (40).

10. The system according to one of the preceding claims, further comprising an output device for informing an user about the status of instrument tip (20).

11. Method for determining the status of instrument tip of a dental treatment device, in particular by using a system according to one of the preceding claims, comprising:
- positioning (100) the instrument tip (20) in a receiving region (15),
- detecting (101) a projection of the instrument tip (20) on a plane comprising a reference marking (40), wherein the plane preferably extends perpendicular to the orientation of the instrument tip (20) fixed to the receiving region (15), and
- determining the status of the instrument tip (20) based on the relative position of the projection of the end (25) of the instrument tip (20) to the reference marking (40).

12. Method according to claim 11, wherein the projection of the instrument tip (20) is detected from a top view on the instrument tip (20).

13. Method according to claim 11 or 12, wherein the projection of the instrument tip (20) is detected by a detection device (50).

14. Method according to one of the claim 13, wherein a parallax free relative position between the projection of the end (25) of the instrument tip (20) and the reference marking (40) is used for determining the status of the instrument tip (20).

15. A software product and/or a network, wherein the software product and/or the network comprises program code for implementing one of the methods according to one of the claim 11 to 14.
